# EUROPÄISCHE PATENTANMELDUNG

(11) **EP 4 465 137 A1**
(43) Veröffentlichungstag der Anmeldung: **20.11.2024**
(21) Anmeldenummer: 23173646.3
(22) Anmeldetag: 16.05.2023
(51) Int. Cl.: G05B 19/05, G06F 8/36, G06F 8/75

(54) **COMPUTERIMPLEMENTIERTES VERFAHREN ZU VERWENDUNGSZWECKABHÄNGIGEM AUFFINDEN VON DATENPUNKTEN IN EINEM SPS SOFTWAREPROGRAMM UND COMPUTERPROGRAMMPRODUKT**

(71) Anmelder: Siemens Aktiengesellschaft, 80333 München (DE)
(72) Erfinder: Puntel Schmidt, Philipp, 90453 Nürnberg (DE); Witte, Martin, 91126 Schwabach (DE)
(74) Vertreter: Siemens Patent Attorneys

(57) **Zusammenfassung**

Die Erfindung betrifft ein Verfahren zum verwendungszweckabhängigen Auffinden von Datenpunkten in einer Steuerungssoftware für eine Speicherprogrammierbare Steuerung.

Bei der Lösung des Problems wird die Idee genutzt, mittels verschiedener, aus dem Code erzeugter Abhängigkeitsmodelle einzelne Datenpunkte bzw. Abfolgen/Sequenzen von Datenpunkten zu ermitteln. Die technische Lösung analysiert einzelnen Abhängigkeiten von Datenpunkten innerhalb des Codes und erzeugt aus diesen mehrere Abhängigkeitsmodelle. Die Datenpunkte werden dabei explizit abhängigkeitsmodellübergreifend verknüpft. Diese Abhängigkeitsmodelle werden anschließend genutzt, um einerseits spezifische Datenpunkte zu extrahieren. Zusätzlich können Sequenzen oder ähnliches gefunden werden.

## Beschreibung

Die Erfindung betrifft ein Verfahren zum verwendungszweckabhängigen Auffinden von Datenpunkten in einer Steuerungssoftware für eine Speicherprogrammierbare Steuerung. Die Erfindung betrifft weiterhin ein Computerprogrammprodukt.

Eine Speicherprogrammierbare Steuerung (SPS, englisch: programmable logic controller, PLC) ist ein Gerät, das zur Steuerung oder Regelung einer Maschine oder einer, insbesondere industriellen, Anlage eingesetzt und programmiert wird. Controller werden dafür benutzt, Funktionen der diskreten oder Prozess-Fertigung ausführen zu können. Die Anbindung der Speicherprogrammierbare Steuerung an die Maschine bzw. Anlage erfolgt üblicherweise mit Sensoren und Aktoren. Die Sensoren sind über die Datenschnittstellen mit den Eingängen der SPS verbunden und vermitteln der SPS durch Senden von gemessenen Sensorwerten das Geschehen in der Maschine oder Anlage. Beispiele für Sensoren sind Taster, Lichtschranken, Inkrementalgeber, Endschalter, Temperaturfühler, Drehzahlmesser, oder auch Füllstandsmesser.

Aktoren sind an den Ausgängen der SPS angeschlossen und bieten die Möglichkeit, die Aktionen der Maschine oder Anlage zu steuern. Beispiele für Aktoren sind Schütze zum Einschalten von Elektromotoren, elektrische Ventile für Hydraulik oder Druckluft, aber auch Module für Antriebssteuerungen (Motion Control, Drehzahlsteuerung mit kontrollierter Beschleunigung oder Verzögerung, Schrittmotorsteuerungen) oder Bremsen.

Ein Datenpunkt (Data Point) ist eine Einheit von Informationen. In einem allgemeinen Sinne ist jede einzelne Tatsache ein Datenpunkt. In einem statistischen oder analytischen Kontext wird ein Datenpunkt normalerweise aus einer Messung oder Untersuchung abgeleitet und kann numerisch und/oder grafisch dargestellt werden. Der Begriff Datenpunkt ist in etwa gleichbedeutend mit Datum, der Singularform von Daten. Datenpunkte können physisch und virtuell sein. Physische (oder auch reale) Datenpunkte referenzieren auf digitale oder analoge Ein- und Ausgänge eines direkt angeschlossenen Systems, wie den Sensoren und Aktoren. Hier werden Hardware-Ein/Ausgänge belegt.

Es gibt auch softwarebasiert Datenpunkte. Sie sind das Resultat von Verarbeitungen oder beschreiben die Einrichtung eines Systems oder ein Gerät in einem anderen System. Beispiele sind berechnete Werte, Betriebsstundenzähler, Ereigniszähler, Befehlsausgaben oder Sollwertausgaben für den Betrieb der Anlage.

Die in der Speicherprogrammierbaren Steuerung enthaltenen Softwareprojekte, in denen die zu automatisierenden Funktionen der Anlage programmiert sind, sind in der Regel sehr komplex. Die Funktionen enthalten eine Reihe von Datenpunkten, also Informationseinheiten, jeder Datenpunkt enthält dabei einen Ein- oder Ausgangswert, der durch das System überwacht und gesteuert wird. Die Datenpunkte können aber auch Konfigurationsdaten (beispielsweise Adress-Daten) oder andere Informationen enthalten, wie sie für einen Digitalen Zwilling der Anlage benötigt werden.

Ein Datenpunkt beschreibt beispielsweise, ob ein Sensor belegt ist, er kann Informationen über von einem RFID Tag gelesene Daten enthalten, oder kann für die Freigabe von Materialtransport an einem Dispositionspunkt verwendet werden.

Die Betrachtung und Auswertung dieser Datenpunkte ist nicht nur innerhalb einer Speicherprogrammierbaren Steuerung SPS interessant (für die Produktion), sondern auch für einen Nutzer außerhalb (Nachbereitung). Das Monitoring ausgewählter Datenpunkte kann beispielsweise helfen, eine Überwachung im Sinne einer vorausschauenden Instandhaltung (Predictive Maintenance) durchzuführen, oder eine Prozesswertüberwachung zu ermöglichen oder zu vereinfachen.

Insbesondere in sogenannten "Brownfield"-Projekten, also solchen Projekten, die schon im Einsatz sind und daher über ein bereits bestehendes Softwarekonzept verfügen, gibt es das Problem, die relevanten Datenpunkte in dem Programmcode zu finden. SPS-Projekte unterscheiden sich dabei nicht nur im Aufbau und der Struktur von anderem Code, sondern auch durch die Semantik, abhängig vom gewünschten Einsatzgebiet. Das Problem betrifft einzelne Datenpunkte (z. B. die Schreibbereiche / Datenpunkte von RFID Geräten im SPS Code) aber auch mehrere verkettete Datenpunkte, z. B. wenn die gewünschte Information eine Sequenz (Materialfluss, etc.) betrifft, die gesucht und gefunden werden soll. Das Suchen des Datenpunkts mittels einfacher Textsuche ist dabei nicht zielführend, da Datenpunkte immer in einem Kontext betrachtet werden müssen:
- wo werden diese aufgerufen,
- wie werden diese verwendet,
- besteht ein Zusammenhang des Datenpunkts mit mehr als einem Anlagenteil.

Die Namen der Datenpunkte (z. B. der Variablen) können dabei auch der Namenskonvention des jeweiligen Anlagenbetreibers unterstellt und damit nicht im Wirkungsbereich des ursprünglichen Herstellers sein.

Relevante Datenpunkte werden heute vom Programmierer bei der Erstellung der Automatisierungslösung ("Greenfield") identifiziert und freigegeben, etwa als überwachte Datenpunkte. Die Bewertung der Relevanz erfolgt dabei auch nach den zum Zeitpunkt der Erstellung relevanten Fragestellungen. Dies setzt eine genaue Kenntnis der Automatisierungslösung voraus und ist deshalb zu einem späteren Zeitpunkt (im "Brownfield", also wenn die Anlage bereits in Betrieb genommen wurde) nicht anwendbar.

Benötigt man die gesuchten Informationen zu einem späteren Zeitpunkt, wenn die Anlage bereits in der Anwendung läuft, werden Datenpunkte (inklusive der Datenpunkt-Sequenzen oder Abfolgen) im Programmcode vollständig und rein manuell extrahiert, also mit maximalem Aufwand. Gegebenenfalls kann eine Querverweisliste zur Hilfe herangezogen werden. Das Auffinden relevanter Datenpunkte kann für ein großes Automatisierungsprojekt mit vielen Millionen "Lines of Code" mitunter mehrere Wochen in Anspruch nehmen.

Es ist Aufgabe der Erfindung, ein Verfahren anzugeben, welches ein automatisiertes Auffinden von Datenpunkten in einem Automatisierungsprogramm ermöglicht. Weiterhin ist es Aufgabe der Erfindung, eine Lösung anzugeben, welche dem Benutzer Anhaltspunkte zur Fehlersuche oder Optimierung von Prozessen in einer Anlage mittels Analyse der Datenpunkte liefert.

Bei der Lösung des Problems wird die Idee genutzt, mittels verschiedener, aus dem Code erzeugter Abhängigkeitsmodelle einzelne Datenpunkte bzw. Abfolgen/Sequenzen von Datenpunkten zu ermitteln. Die technische Lösung analysiert einzelnen Abhängigkeiten von Datenpunkten innerhalb des Codes und erzeugt aus diesen mehrere Abhängigkeitsmodelle. Die Datenpunkte werden dabei explizit abhängigkeitsmodellübergreifend verknüpft. Diese Abhängigkeitsmodelle werden anschließend genutzt, um einerseits spezifische Datenpunkte zu extrahieren. Zusätzlich können Sequenzen oder ähnliches gefunden werden.

Die Erfindung wird auch durch die Figuren illustriert.

Dabei zeigen die Figuren wie folgt:
Figur 1 eine mögliche Architektur der erfindungsgemäßen Lösung,
Figur 2 ein mögliches Ablaufdiagramm für das Verfahren
Figur 3 ein alternatives Ablaufdiagramm zu Figur 2,
Figur 4 eine erste Grafendarstellung aller Datenpunkte einer Anlage und gefilterter Datenpunkte und
Figur 5 ein Beispiel mit Visualisierung zum Materialfluß.

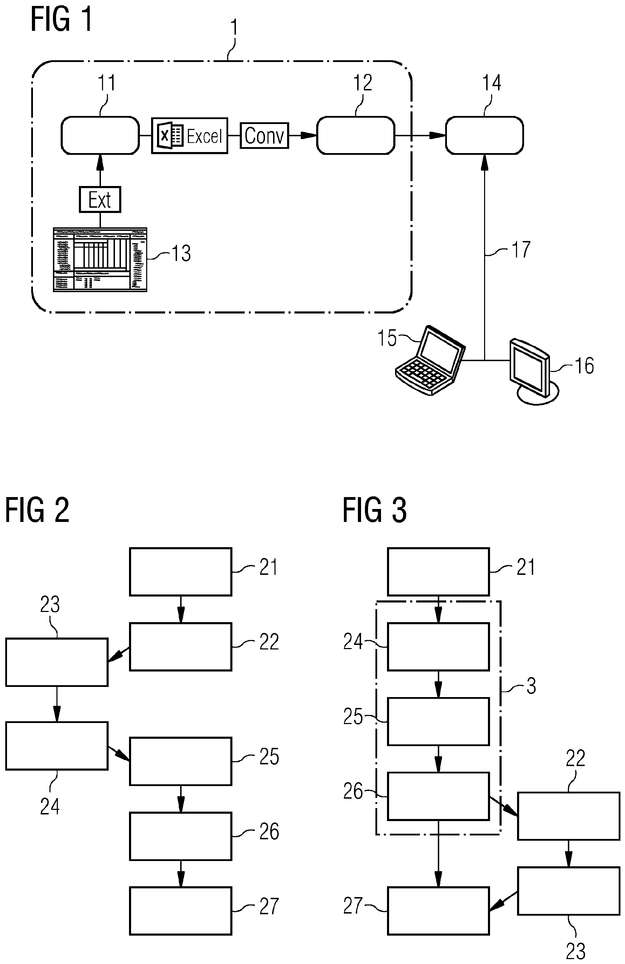

Das Verfahren läuft beispielsweise auf einer Architektur wie sie in der Figur 1 high-level dargestellt ist.

Links, 1, wird ein Bereich dargestellt, der nicht direkt in die Steuerung der Anlage eingreift, sondern eine Bearbeitung der Daten offline zulässt. Über ein Eingabetool 13 zum Engineering, wie beispielsweise das TIA Portal der Firma Siemens, werden die benötigten Daten des Steuerungsprogramms heruntergeladen, ExT, auf ein geeignetes Tool zur Weiterverarbeitung und gegebenenfalls konvertiert, über einen Semantic Converter.

Auf der rechten Seite der Darstellung sind verschiedene Applikationen dargestellt, die mittels der Informationen in den Datenpunkte wiederum Teile einer Anlage steuern können, 15, 16.

Es gibt eine Schnittstelle zu der Offline-Bearbeitung, hier können verschiedene Tools zum Einsatz kommen, beispielsweise Blazegraph, eine extrem leistungsstarke Datenbank für große Graphen, die sowohl Semantic Web (RDF/SPARQL) als auch Graphendatenbank APIs bietet.

Im Folgenden wird ein computerimplementiertes Verfahren verwendet in einer ersten Ausgestaltung detailliert beschrieben wird.

Die Schritte des Verfahrens sind in den Figuren 2 und 3 dargestellt, in zwei alternativen Ausgestaltungsformen der Ausführung.

Schritt 1 (Extrahierung der Querverweise aus dem Code), 21: Aus dem vorliegenden Code wird eine Querverweisliste erzeugt. Querverweise enthalten alle Aufrufe aller in einem Programm verwendeter Variablen einer Steuerung mit Informationen, wo diese Variable im Konkreten aufgerufen wird und wie diese im Konkreten verwendet wird.

Schritt 2 (Definition von Keywords zur Filterung), 22: Abhängig vom verwendeten Use-Case werden Schlüssel (Keywords) festgelegt. Aufgrund dessen, dass sich die Semantik von Automatisierungsprojekten (auch bei Verwendung von Werksstandards) unterscheidet, müssen diese Schlüssel / Keywords entweder manuell vorgegeben werden oder aus einer Liste von vordefinierten Keywords Use-Case abhängig definiert werden.

Schritt 3 (Erzeugung des Abhängigkeitsmodells): 25

Aus der Querverweisliste heraus wird ein Abhängigkeitsmodell erzeugt. Hierfür sind mehrere Schritte notwendig:
Schritt 3A (Filtern): 23
   Die in Schritt 1 erzeugte Querverweisliste wird anhand der in Schritt 2 definierten Schlüssel / Keywords vorgefiltert, um eine Liste aller in Frage kommenden Datenpunkte zu erzeugen. Filterkriterien können Namenskonventionen der Strukturen (DBs, PLC-Datentypen UDTs) oder der Datenpunkte sein, Kommentare, Zugehörigkeit zu Funktionsgruppen, angeschlossene Hardware (z. B. ein RFID-Leser) oder Verwendung.
Schritt 3B (Liste mit Datenpunkt-Verwendung erzeugen): 24
   Die vorgefilterten Datenpunkte werden dahingehend untersucht, ob der Datenpunkt an einer bestimmten Stelle gelesen oder geschrieben wird oder ob beides zugleich passiert. Die Ergebnisse werden in eine Liste eingetragen.

Schritt 4 (Erzeugen mehrerer Abhängigkeitsbäume/Graphen): 26 Aus den im Schritt 3 erzeugten Informationen werden Abhängigkeitsbäume gebildet.

Die Informationen aus Schritt 3 werden so verknüpft, so dass erkenntlich ist, wo im Code (im Falle einer SPS: in welchem Baustein) ein spezifischer Datenpunkt gelesen und wo dieser Datenpunkt geschrieben wird. Das heißt, in den Abhängigkeitsbäumen entsteht ein Eintrag für das Lesen und das Schreiben eines Datenpunkts. Im Falle eines Lese-/Schreibzugriffs werden 2 Einträge (je einer für lesen, einer für schreiben) erzeugt. Mehrfachverwendungen von Datenpunkten sind explizit erlaubt. Dadurch entsteht ein Graph. Dieser Graph zeigt Verkettungen, die spezifische Abfolgen bzw. Sequenzen darstellen und so beispielsweise den Materialfluss oder eine Abarbeitungsreihenfolge eines Fertigungsprozesses.

Generell: In erzeugten Abhängigkeitsbäumen/Graphen sind alle kontextsensitiven Informationen zu einem spezifischen Datenpunkt enthalten.

Schritt 5 (Auswertung und ggf. Visualisierung der Ergebnisse): 27

Die Ergebnisse können in einem letzten Schritt visualisiert werden, z. B. in Form eines Graphs. Die in Schritt 4 erzeugten Abhängigkeitsbäume/Graphen können dabei direkt verwendet werden.

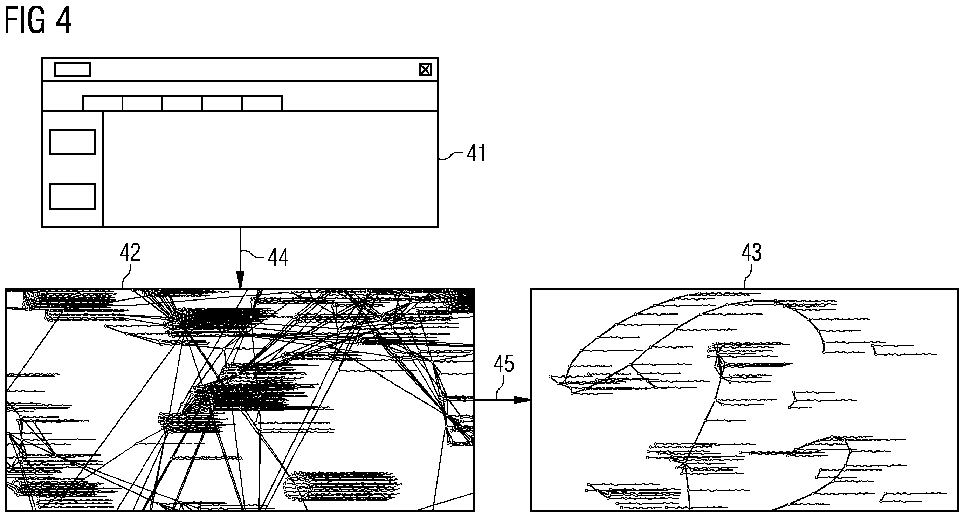

Die Visualisierung der Ausgabe wird beispielsweise in der Figur 4 dargestellt. Das verwendete Programm zur Steuerung wird üblicherweise in einem Editorfenster bearbeitet, 41. Die herkömmliche Bearbeitung des Codes ist sehr aufwändig, wie oben beschrieben. Dies trifft insbesondere zu, wenn in einer bereits im Feld befindlichen Anlage nachträglich Änderungen eingebracht werden sollen.

In dem gezeigten Beispiel ist ein Materialfluß in der Anlage ermittelt und visualisiert worden.

In einer ersten grafischen Übersicht 42 sieht man die aus dem Programm extrahierten Datenpunkte und Querverweise, durch den Schritt des Filterns 45 wird in der Grafik 43 ein verwendungszweckabhängiges Datenmodell angezeigt, welches gegenüber der ungefilterten Information für die weitere Bearbeitung deutlich verbessert ist.

Nach den folgenden Kriterien kann die gesuchte Information strukturiert werden:
- Aufrufstruktur (z. B. gestaffelt in Aufrufblöcke)
- Sequenzanalysen
- Abhängigkeiten (Typ, Instanz, Universal Dependency Treebank UDT)
- Materialfluß (beispielsweise ermittelt mit Hilfe von RFID-Sensoren)

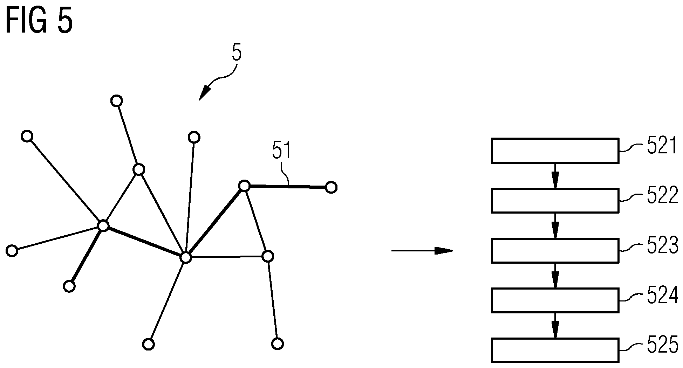

Figur 5 zeigt ein Beispiel für eine Analyse des Materialflusses. Die Figur links 51 zeigt eine vereinfachte Darstellung einer industriellen Anlage. Jeder Knoten den Graphen entspricht beispielsweise einer Bearbeitungsstation und jede Kante des Graphen einem möglichen Transportweg.

Zunächst wird die Struktur analysiert, in Schritt 521. Danach werden die Abhängigkeiten der Datenknoten untersucht 522. In dem Fall wird beispielsweise ein RFID-Sensor eingesetzt, die Nutzungsdaten werden analysiert, 523. Danach wird eine Ablauf-Sequenz aus den ermittelten Daten erzeugt, 524.

Daraus kann dann der Materialfluß durch die Anlage errechnet werden, 525.

Die beschriebene Lösung erhöht die Effizienz beim Suchen einzelner Datenpunkte sowie von Sequenzen zusammenhängender Datenpunkte signifikant. Ein Vergleich bei der Suche von Sequenzen innerhalb eines Codes ergab eine Zeitersparnis im Vergleich ~ 1 Minuten (Anwendungen des hier vorgestellten Verfahrens) zu 1-2 Wochen (rein manuelle Auswertung des Codes).

## Patentansprüche

1. Computerimplementiertes Verfahren zum Verwendungszweck-abhängigen Auffinden von Datenpunkten in einem Softwareprogramm zur Steuerung einer Anlage in der Automatisierung,
mit folgenden Schritten
- Suchen von existierenden Datenpunkte in dem Software-Programm,
- Ermitteln von Abhängigkeiten der Datenpunkten (21),
- Verknüpfen von Sequenzen von Datenpunkten anhand der ermittelten Abhängigkeiten (26),
- Erzeugen eines Abhängigkeitsmodells (5) aus den erzeugten Sequenzen (25),
- Bearbeiten des Softwareprogramms zur Anpassung der Steuerung durch Bearbeitung der ermittelten Datenpunkte.

2. Computerimplementiertes Verfahren gemäß Patentanspruch 1, **dadurch gekennzeichnet, dass**
die Abhängigkeit (21) eines Datenpunkts sich ergibt durch
- Verknüpfung mit einer Variablen des Programms,
- Auffinden von Aufrufen der Variablen und
- Auffinden der Verwendung der Variablen.

3. Computerimplementiertes Verfahren gemäß einem der vorherigen Patentansprüche, **dadurch gekennzeichnet, dass** Abhängigkeiten der Datenpunkte ermittelt werden durch Definition von Verwendungszweck-abhängigen Filtern (23).

4. Computerimplementiertes Verfahren gemäß einem der vorherigen Patentansprüche, **dadurch gekennzeichnet, dass** die Verknüpfung abhängig von der dem Aufruf folgenden Aktion auf den Datenpunkt erfolgt, insbesondere getrennte Verknüpfungen für lesenden und schreibenden Zugriff.

5. Computerimplementiertes Verfahren gemäß einem der vorherigen Patentansprüche, **dadurch gekennzeichnet, dass** die Datenpunkte strukturiert werden nach:
- Aufrufstruktur, und/oder
- Sequenzanalyse, und/oder
- Abhängigkeiten von Typ des Datenpunkts, oder von der Instanz des Datenpunkts, oder von der Universal Dependency Treebank (UDT) Verknüpfung des Datenpunkts,
- Materialfluß in der industriellen Anlage.

6. Computerimplementiertes Verfahren gemäß einem der vorherigen Patentansprüche,
**dadurch gekennzeichnet, dass**
eine Visualisierung (27) des Ergebnisses erfolgt.

7. Computerprogrammprodukt, geeignet und eingerichtet zur Durchführung der Schritte eines der Verfahren gemäß einem der vorhergehenden Patentansprüche.
